# EUROPEAN PATENT SPECIFICATION

(11) **EP 2 211 642 B1**
(45) Date of publication and mention of the grant of the patent: **07.08.2013**
(21) Application number: 08832822.4
(22) Date of filing: 29.08.2008
(51) Int. Cl.: A23L 2/04, B07C 5/342

(54) **METHOD FOR PRODUCING JUICE HAVING PRE-SELECTED PROPERTIES AND CHARACTERISTICS**
VERFAHREN ZUR HERSTELLUNG VON SAFT MIT VORBESTIMMTEN EIGENSCHAFTEN UND CHARAKTERISTIKA
PROCÉDÉ POUR PRODUIRE UN JUS PRÉSENTANT DES PROPRIÉTÉS ET DES CARACTÉRISTIQUES PRÉSÉLECTIONNÉES

(30) Priority: 24.09.2007 US 859871
(43) Date of publication of application: 04.08.2010
(73) Proprietor: TROPICANA PRODUCTS, INC., Bradenton, FL 34208 (US)
(72) Inventor: EVANS, Kevin, Barrignton Illinois 60010 (US); GARCIA, Salvador, Lakeland Florida 33803 (US); DOUGLAS-MICKEY, Jason, McHenry Illinois 60050 (US); SCHROEN, Jeffrey, P., Cary Illinois 60013 (US); HITCHCOCK, Bryan, Mundelein Illinois 60060 (US)
(74) Representative: Duxbury, Stephen
(86) International application number: PCT/US2008/074839
(87) International publication number: WO 2009/042352

(56) References cited:
- WO-A-00/27226
- US-A- 5 386 766
- US-A- 5 791 497
- DATABASE WPI Week 199738 Thomson Scientific, London, GB; AN 1997-409817 XP002507335 & JP 09 182512 A (KAGOME KK) 15 July 1997 (1997-07-15)
- SHYAM N. JHA; T. MATSUOKA: "Non-destructive determination of acid-brix ratio of tomato juice using near infrared spectroscopy" INTERNATIONAL JOURNAL OF FOOD SCIENCE AND TECHNOLOGY, vol. 39, 2004, pages 425-430, XP002507334

## Description

### FIELD OF THE INVENTION

The invention relates to a method for producing juice having pre-selected properties and characteristics. In particular, the invention relates to a method for producing vegetable or fruit juice having pre-selected properties and characteristics based on classification and separation by non-destructive testing of the vegetables or fruit from which the juice is made.

### BACKGROUND OF THE INVENTION

The quality of a foodstuff is a primary factor in a consumer's purchasing decision. Various properties and characteristics of the foodstuff are considered by the purchaser. For example, freshness, juiciness, firmness, appearance, and other parameters are evaluated. These and other properties and characteristics are considered in the purchase decision. In particular, consumers evaluate vegetables and fruits by visual, manual, and sometimes taste and smell testing. However, taste-testing is valid only on the piece evaluated, and, often, another piece in the same product batch has significantly different properties and characteristics. Further, other testing is only indicative of the quality of the fruit or vegetable, and a consumer can be fooled. For example, a citrus product may be dry, even though it felt heavy enough to be moist. Similarly, it is very difficult to judge by visual and manual inspection whether an apple has been frozen.

Individual consumers shopping for a family can, if desired, take the time to evaluate each individual piece of fruit or of vegetables. However, this individual approach is impractical for commercial food packers. Rather, because food packers cannot inspect and taste-test each piece in a shipment of fruit or vegetables, a small fraction of the pieces in a delivery are evaluated. It is assumed that these pieces are representative of the average quality of the entirety of the batch, and the average quality of the group tested becomes the assumed average quality for the remainder of fruit or vegetables in the shipment.

Batch sampling is a commercially reasonable way of determining the quality properties and characteristics of a large quantity of fruit or vegetables. However, sampling often does not identify sub-standard quality in a number of pieces within the batch. The ability to identify these sub-standard pieces would be advantageous, and would improve the quality of the resultant food product. Sampling also often does not identify pieces having extraordinary or premium properties and characteristics. Such pieces might be salable at premium prices. Rather, sampling produces an "average value" approach, i.e., the entire quantity of fruit (for example, a bin of 120,000 oranges or an unknown number of tomatoes) is assigned an "average value" based on the sampled test.

Techniques have been developed for automated, objective evaluation of individual pieces, particularly fruit pieces. These techniques are used, for example, to separate large pieces from small pieces, or heavy pieces from light pieces, for example. The skilled practitioner is familiar with automated techniques for determining whether the color of a fruit piece, or the weight thereof, is within a pre-selected range. Shape discriminators also have been developed. Typically, however, these properties and characteristics do not correlate well with quality.

Techniques also have been developed to non-destructively evaluate certain properties and characteristics of the interior of the piece, again, particularly fruit pieces. In particular, visible, near infrared (NIR), and infrared wavelengths are used to determine, for example, the Brix content or sugar concentration (sweetness) in liquids within the fruit or vegetable. Firmness also has been measured, and often has been used as an indicator of ripeness. Density, acidity pH, bruises, and other internal and external damage also can be identified and used to identify fruit for direct Consumption (also known as "table fruit") and fruit not suitable for sale or consumption.

Techniques for measuring selected properties and characteristics of the interior of the fruit are known. However, there exists a need to improve the yield of such determinations. Whereas the average-value techniques described herein are commercially valuable for table fruit, they are not sufficient to enable the food packer to maximize the value of fruit received. For example, oranges typically are supplied in bins holding about 120,000 oranges. Specific bins or combinations of bins could be used to produce juice with generalized characteristics to meet broad criteria. Similar situations are found with other citrus, other fruits for juice, and other vegetables, such as tomatoes and celery, which are juiced.

Thus, there exists a need for a method that provides for production of super-premium and specialized juices by way of non-destructive testing to sort fruit into specific categories.
US patent 5,791,497 discloses a method of separating fruit or vegetable products.
WO 00/27226 discloses cranberry processes and products.
US patent 5,386,766 discloses automatic juice extraction system.
The database WPI Week 199738 Thomson Scientific, London, GB; AN 1997-409817 XP002507335& JP 9 182512 A (KAGOME KK) 15 July 1997 (1997-07-15) discloses a method for producing carrot juice.

### DETAILED DESCRIPTION OF THE INVENTION

The invention is directed to method for producing vegetable or fruit juice having pre-selected properties and characteristics according to the claims.

The invention enables production of juices having enhanced value. Therefore, not only is it possible to provide consumers with preferred products, but also it enables the seller to maximize income from sales. It also provides the seller an opportunity to sell a product in relatively smaller quantities by facilitating selection of vegetables or fruit to make such a product from the large quantities typically supplied. In particular, super-premium and premium products are more easily and efficiently made. Super-premium and premium products are products that have enhanced value because the properties and characteristics thereof are not easily attained with the 'average-value' approach on vegetables or fruit supplied in typical quantities, such as bins of about 120,000 oranges or truckloads of tomatoes. Thus, the seller can select a category of vegetables or fruit from the entirety of the shipment and make the premium product in accordance with the method described herein.

Specialized juice has enhanced value. However, as the skilled practitioner recognizes, each vegetable or fruit juice product has differing characteristics that could be considered to make the juice 'premium' or 'super-premium.' For example, for orange juice, specialized juice may have a selected Brix, whether high or low, a low acid value, or any other property or characteristic, has enhanced value. Specialized tomato juice may have low acid value or a high solids concentration. These juice products often are known as premium or super-premium juices. Consumers often will pay a premium for such juice products. Further, these premium and super-premium juices typically are made in smaller quantities than are typical products. Being able to separate and categorize vegetables or fruit that make such products is useful in making such lesser quantities.

Any vegetable or fruit that can be juiced and can be non-destructively tested for relevant properties and characteristics can be processed in accordance with an embodiment of the invention. Suitable vegetables or fruit include citrus fruits, including orange, mandarin orange, lemon, lime, grapefruit, tangerine, pomelo, and tangelo; melons, including honey dew, cantaloupe, persian, and santa claus; tomatoes; and carrots. Tropical fruits, such as mangos, guavas, pineapples, bananas, plantains, coconuts, and the like, also are suitably processed in accordance with an embodiment of the invention. Stone fruits, including peaches, plums of all types, nectarines, apricots, and the like also can be non-destructively categorized and juiced in accordance with an embodiment of the invention. Additional vegetables suitably processed in accordance with an embodiment if the invention includes tubers and onions. The skilled practitioner recognizes that this list is merely exemplary, and is not exhaustive

Skilled practitioners recognize that vegetable or fruit juices have various properties and characteristics that may make the juice a premium or super-premium product. For example, important properties and characteristics for citrus fruit juice typically include Brix, acidity, Brix/acid ratio, mouthfeel, astringency, oil content, color, sourness, and bitterness. Also, other fruit flavors and characteristics of citrus, such as pineapple, tropical, and peach notes, are important properties and characteristics that can be evaluated in accordance with an embodiment of the invention. For tomato juice, acidity, solids content, and mouthfeel typically are important properties and characteristics. Each of these can serve as a pre-selected property or characteristic of juice to be produced. Skilled practitioners recognize that these properties and characteristics are only examples of a larger set of properties and characteristics consumers prefer, and can identify other such properties and characteristics in accordance with the guidance provided herein.

In one embodiment, oranges are selected to obtain a juice that has a range of Brix; for example, from 10 to 14 Brix. Alternatively, oranges can be selected to yield a juice having a Brix range of about 1, i.e., about 10 Brix, or about 11 Brix, about 12 Brix, and the like. Such juices would be considered super-premium juices in view of the narrow range afforded the Brix property. With the guidance provided herein, the skilled practitioner will be able to identify properties and characteristics that will yield a desirable product.

Maturity can be determined and used to sort citrus. As the skilled practitioner recognizes, it is not uncommon to have fruits of two distinct crops, or "blooms", on a tree simultaneously. These different crops consist of more-mature and less-mature fruit, respectively. As the skilled practitioner recognizes, both crops will be picked simultaneously. Therefore, it is useful to separate the fruit using maturity as the sortation characteristic. Maturity is reflected by the color of the fruit. A color-based sortation can be used to separate more-mature fruit from less-mature fruit. This color separation is carried out in one embodiment of the invention by determining the red (R) and green (G) spectra on the fruit. The ratio of R/G of a mature fruit is greater than about 0.9.

To obtain juice having the pre-selected properties and characteristics, the relationship between the pre-selected juice property or characteristic and a property or characteristic in the vegetable or fruit that produces juice having pre-selected juice properties and characteristics must be understood. Such a relationship or correlation can be developed for between, for example, a characteristic of fruit-infrared transmittance of Valencia oranges, for example-and a property or characteristic of juice from that fruit-for example, Brix of the resultant juice. Other correlations would be required for Brix in grapefruit juice, for acidity in Valencia orange juice, and for acidity in grapefruit juice. Therefore, in accordance with an embodiment of the invention, non-destructive testing would be testing suitable to identify Brix and other properties in the oranges. Other relationships between properties and characteristics of a vegetable or fruit and properties and characteristics of the juice made from the vegetable or fruit are known to skilled practitioners, or are easily developed with the guidance provided herein.

Any method of non-destructive testing can be used to determine the various properties and characteristics of the vegetable or fruit under review. Infrared and near infrared techniques, including spectroscopy, for determining properties and characteristics for melons and citrus fruit are well known to skilled practitioners. Luminescence, reflectivity measurements in visible wavelength bands, and visible light and laser light sources also have been used to determine properties and characteristics of fruit. Cameras are used to determine surface characteristics. Various methods, including impinging puffs of gas on the surface of the object being measured or applying a mechanical force (such as pressing) to fruit and vegetables is used to determine firmness, and hence ripeness. Ultrasonic methods also are known for determining the age of a vegetable or fruit. The skilled practitioner recognizes that use of a technique to determine a property or characteristic of a vegetable or fruit requires correlation between the measurement, which may be in the form of "percentage of light transmitted" or "frequency of light reflected," with the properties and characteristics being measured, as described above. This is a standard approach to these determinations, and various methods for so doing are disclosed in the patents and other literature directed to the measurement techniques themselves. For example, one measures the characteristic of the fruit, then juices the fruit and measures the property of the fruit for which the correlation is sought. Thus, with the guidance provided herein, the skilled practitioner will be able to identify and use a measurement process to determine properties and characteristics of vegetables or fruit.

Because it is a property or characteristic of the vegetable or fruit that can be measured, but the property or characteristic of the juice that controls the sortation of the vegetables or fruit, it is necessary to develop a relationship between the two sets of properties and characteristics. That is, a correlation must be developed between the measured property or characteristic of the vegetable or fruit and the property or characteristic of the juice to be predicted by the measured property or characteristic. The skilled practitioner can, with the guidance provided herein, develop a correlation between the measured property or characteristic of the vegetable or fruit and the property or characteristic of the juice to be predicted.

To obtain juice having the pre-selected properties and characteristics in accordance with an embodiment of the method of the invention, non-destructive testing is carried out on vegetables or fruit to enable separation of the vegetables or fruit into categories. The categories are established to separate vegetables or fruit that have desired properties and characteristics from those that do not. For example, in accordance with an embodiment of the invention, it is possible to sort oranges by Brix of the juice. Therefore, in an embodiment of the invention, oranges yielding juice having a selected Brix value, such as 13, can be categorized separately from the oranges yielding juice having a Brix of 14 or greater and having a Brix of 12 or less. Then the oranges selected yielding juice having a Brix of 13 are used to produce orange juice having a Brix of 13 by processing the oranges in a known manner of making orange juice. Thus, a super-premium orange juice can be prepared in accordance with this embodiment. Similarly, oranges yielding juice having a Brix of 12 can be separately categorized to make a premium orange juice having a Brix of 12.

Other properties and characteristics of the fruit or vegetables can be used as bases for categorization. For example, categories relating to spoilage, such as decay or rot, can be established. Other properties and characteristics of fruit or vegetables upon which categories can be based include size, color, and moisture in the fruit. For example, maturity (color) often is determined by NIR and correlation thereof with the color of the fruit. Skilled practitioners can, with the guidance provided herein, select properties and characteristics by which to categorize vegetables or fruit to obtain a juice having pre-selected properties and characteristics.

In another embodiment, it is possible to produce juice from fruit or vegetables having essentially no culls. In accordance with this embodiment, non-destructive testing is used to identify fruit or vegetables having spoilage, such as an opening in the skin or rind, a bruise or soft spot, rash, or other defect. These fruit or vegetables are categorized separately from the remainder of the fruit or vegetables. The fruit juice then is made by juicing the oranges that are not identified as culls in the categorization.

Embodiments of the invention are directed to categorization of fruit or vegetable by non-destructive testing to identify one or more properties and characteristics. Categorization by one property or characteristic often is sufficient. However, two or more properties or characteristics sometimes are required to categorize fruit or vegetables in a manner that yields the desired separation of categorization.

Categorization using two or more properties or characteristics can be done in two or more sortations, or can be done in one sortation. For example, if properties A, B, and C are used to characterize fruit, fruit can be sorted once to separately recover fruit having property A. Then this fruit can be characterized by one of the other properties. In the alternative, if properties A, B, and C can be determined in one step, only one sortation is necessary to properly categorize the fruit.

An embodiment of the invention is directed to using two properties or characteristics to categorize fruit or vegetables.

An embodiment of the invention using two properties and characteristics to effect separation is the separation of citrus fruit culls from wholesome fruit, which often is carried out by sorting based on two properties and characteristics of the fruit. Color and Brix and maturity and Brix are examples of two pairs of properties and characteristics that can be used to identify culls and remove them from useable fruit. Examples of other pairs of properties and characteristics that yield useful results include Brix/acid ratio, size and Brix, and size and maturity. With the guidance provided herein, the skilled practitioner can identify other combinations of properties and characteristics that can be used to sort fruit to yield super premium products.

The non-destructive testing is carried out on commercially-available equipment suited for the purpose. For example, IR/NIR transmission/absorbance measuring devices are commercially available from many sources. Similarly, size graders and visual inspectors are commonly available from numerous suppliers. One company that supplies various machines is Aweta-Autoline, Inc. In addition to sizers, Aweta-Autoline supplies a blemish grader and a NIR system to detect Brix. With the guidance provided herein, the skilled practitioner can identify other IR/NIR systems, graders, sizers, and other systems suitably used in embodiments of the invention.

### EXAMPLES

For the examples, correlations were established with an Aweta-Autoline IR/NIR-capable system blemish and size grader. A correlation for maturity was established by screening fruit (oranges) having a range of maturity, as reflected in age-related defects. The oranges with known defects were processed by exposure to NIR, and the response was measured. The responses to NIR radiation were correlated to maturity of the oranges to yield an algorithm. The algorithm produced a dimensionless scale ranging from about 0 to 19. Typically, fruit having a maturity value of between 0 and about 9 is considered immature or rotten fruit. Fruit having a maturity value from about 9 to almost 11 is considered to be soft fruit or low-defect fruit mixed with acceptable or wholesome fruit. Fruit having a maturity value between about 11 and 19 is wholesome fruit.

A separate correlation also was developed for determination of Brix based on NIR response of oranges. The response was correlated to directly to Brix to produce and algorithm.

### Example 1

Oranges are sorted into three (3) maturity categories; maturity value between about 0.4 and about 9; about 9 to about 11; and about 11 to 19. The first category represents all culls. The second category represents a mixture of wholesome fruit and low-defect fruit The third category represents only wholesome fruit. Fruit in the third category can be further divided into fruit having maturity values between about 10 and about 12, between about 12 and about 14, and so on. These fruits then are juiced to provide high-value fruit juice.

### Example 2

Oranges are sorted in a single step to yield fruit having a specified maturity value and a specified Brix range. Oranges are sorted by separating fruit having a maturity value between about 9 and about 11 and having a Brix value of at least about 14.5 from the remainder of the fruit. This simultaneous separation yields separated fruit having the designated maturity values and Brix measurements. This technique affords the opportunity to better separate fruit with fewer or less severe defects from wholesome fruit. This fruit is juiced to yield quality fruit juice.

### Example 3

Fruit is sorted to yield fruit juice comprising less than 6%, and preferably less than about 3%, juice from immature fruit. The maturity of the fruit is determined in either of two ways, or in a combination of the ways, as follows: removing fruit having Brix value less than about 11; removing fruit having an R/G ratio of less than about 0.9; or removing fruit having both characteristics. Using both methods are increases the likelihood that a fruit exhibiting both characteristics will be immature.

### Example 4

An Aweta-Autoline blemish grader and an NIR measurement system were used to sort and identify oranges having a Brix about 12. Oranges were processed by NIR scanning. NIR transmission was measured. An algorithm was earlier developed to correlate the NIR measurement with the predicted Brix of the fruit, and hence of the juice. Then, the actual measurement of NIR was carried out, and, by way of the predetermined algorithm, the Brix of oranges is predicted.

The system was run to obtain 12 Brix oranges by doing the sortation to separate oranges having Brix between about 11.95 and about 12.05. Oranges were processed until about 200 oranges believed to have the targeted Brix were identified. Forty of these 200 oranges were randomly selected from the lot and juiced individually with a Hamilton Beach mechanical home juicer. The juice of each orange was individually tested for Brix. A composite juice was made by combining equal amounts of each individual juice portion.

The resulting Brix values formed a normal distribution around a mean Brix value of 12.17 with a standard deviation of 0.55 and a range of from 10.93 to 12.99 Brix. The composite juice had a Brix of 12.14.

### Example 5

The equipment used in Example 4 was used to sort fruit into three categories based on Brix content, as follows: 9.5 to 11.0 Brix; 11.0 to 12.5 Brix.; and 12.5 to 14 Brix. Oranges were processed until the NIR scanner identified between about 50 and about 75 oranges for each category. Fifteen fruit from each category were randomly selected and individually juiced on a Hamilton Beach mechanical home juicer. Each juice was tested to determine Brix, and a composite comprising an equal amount of each sample was prepared.

In the lowest Brix range, the NIR measurement and correlation yielded a normal distribution having a mean of 10.42 Brix. The standard deviation was 0.47, and the range from 9.43 to 11.40 Brix. The Brix of the composite was 10.61. This range comprised about 23 weight % of the total sorted.

In the middle Brix range, the NIR measurement and correlation yielded a normal distribution having a mean of 11.35 Brix. The standard deviation was 0.62, and the range from 10.29 to 12.60 Brix. The Brix of the composite was 11.33. This range comprised about 57 weight % of the total sorted.

In the highest Brix range, the NIR measurement and correlation yielded a non-normal distribution having a mean of 11.95 Brix. The standard deviation was 0.57, and the range from 11.19 to 13.08 Brix. The Brix of the composite was 12.03. This range comprised about 16 weight % of the total sported.

### Example 6

The Aweta blemish grade system was used to sort oranges into specific size categories includes 5.1 cm (2.0 inches) to 6.4cm, 6.4 cm to 7.6cm, and 7.6cm to 8.9 cm) (2.5 inches, 2.5 inches to 3.0 inches and 3.0 inches to 3.5 inches.) There was not enough fruit to conduct testing on the remaining ranges of 8.8 cm to 10.2cm, and 10.2 cm and greater (3.5" to 4.0" and 4.0" and greater.) Oranges were processed through the system.

The optical cameras selected and removed fruit from the fruit flow for each of the size ranges until twenty separate fruit were selected from this lot for each range. The fruit was numbered 1-20 and rescanned twice (once on each of 2 separate camera systems). The large and small diameter measurements were recorded. The fruit was tested for size using the Brown Size Gauge (generalized size measurement) and using calipers (precise size differential).

For the Brown Size measurement, the fruit was tested to determine whether it fit in the selected range and, if not in the appropriate range, whether the sample is over- or under-sized. For all three ranges, all of the fruit met the Brown Size criteria within its specific range. None of the selected fruit was over- or under-sized.

For the caliper measurement, each fruit was measured on its polar and equatorial diameter to a precision of 0.0254 cm (1/100 of an inch.) This measurement for each individual fruit was compared with the recorded values for the large and small diameters. The absolute value of the average difference between these values for both camera systems was used to generate the measurement error. The absolute value is used to negative and positive errors do not cancel each other out. For all three ranges, the average absolute measurement error was 2/16" (0.125" or 3.18 mm) with a range of (1/16" to 3/16".) 0.159 cm to 0.476 cm.

These oranges were not subjected to further processing or analysis.

While the invention has been described with respect to specific examples including presently preferred modes of carrying out the invention, those skilled in the art will appreciate that there are numerous variations and permutations of the above described systems and techniques that fall within the scope of the invention as set forth in the appended claims.

## Claims

1. A method for producing vegetable or fruit juice having a pre-selected juice property or characteristic, said method comprising:
classifying and separating by non-destructive testing vegetables or fruit from which the juice is made into categories based on a measured property or characteristic of the vegetables or fruit;
selecting vegetables or fruits from the categories that will each yield vegetable or fruit juice having the pre-selected juice property or characteristic selected from the group consisting of Brix, Brix/acid ratio, mouthfeel, oil content, and combinations thereof, wherein a predetermined algorithm is used to correlate the result of the non-destructive testing to the pre-selected juice property or characteristic; and
further processing the selected vegetables or fruit to produce the vegetable or fruit juice having the pre-selected juice property or characteristic.

2. The method of claim 1 wherein a first pre-selected juice property or characteristic is selected from the group consisting of Brix, Brix/acid ratio, and combinations thereof.

3. The method of claim 2 wherein a first measured property or characteristic of the fruit or vegetable is infrared transmittance.

4. The method of claim 3 wherein at least one second pre-selected property or characteristic of the fruit or vegetable is selected from the group consisting of Brix, acidity, Brix/acid ratio, size, and combinations thereof.

5. The method of claim 4 wherein the at least one second pre-selected juice property or characteristic is Brix/acid ratio.

6. The method of claim 1 wherein the fruit is citrus,
preferably wherein the fruit is orange or
wherein the fruit is grapefruit, or
wherein the vegetable is tomato.

7. The method of claim 1 wherein a first pre-selected juice property or characteristic of the juice is selected from the group consisting of mouthfeel, oil content, and combinations thereof.

8. The method of claim 7 wherein a first measured property or characteristic of the fruit or vegetable is infrared transmittance.

9. The method of claim 8 wherein at least one second measured property or characteristic of the fruit or vegetable is selected from the group consisting of Brix, acidity, Brix/acid ratio, size, and combinations thereof.

10. The method of claim 9 wherein at least one second pro-selected juice property or characteristic is Brix/acid ratio.

11. A method according to claim 1 for producing vegetable or fruit juice from vegetables or fruit having no culls, said method comprising:
classifying and separating culls from fruit or vegetables having no spoilage, such as an opening in the skin or rind, a bruise or soft spot, rash, or other defect, by non-destructive testing based on maturity and least one second pre-selected property or characteristic of the fruit or vegetable selected from the group consisting of Brix, Brix/acid ratio, size, and combinations thereof.

## Patentansprüche

1. Verfahren zur Herstellung eines Gemüse- oder Fruchtsaftes, der eine vorausgewählte Safteigenschaft oder -charakteristik aufweiset, wobei das Verfahren umfasst:
Klassifizierten und Trennen durch zerstörungsfreies Prüfen vorn Gemüse oder Früchten, aus welchen der Saft hergestellt wird, in Kategorien, die auf einer gemessenen Eigenschaft oder Charakteristik der Gemüse oder Früchte basieren;
Auswählen der Gemüse oder Früchte aus der Kategorie, die jeweils einen Gemüse- oder Fruchtsaft hervorbringen werden, der die vorausgewählte Safteigenschaft oder -charakteristik aufweist, die aus der Gruppe, bestehend aus Brix, Brix/Säure-Verhältnis, Mundgefühl, Ölgehalt und Kombinationen daraus ausgewählt wurden, wobei ein zuvor festgelegter Algorithmus verwendet wird, um das Ergebnis des zerstörungsfreien Prüfens zur vorausgewählten Safteigenschaft oder -charakteristik in Beziehung zu setzen; und
ferner Verarbeiten der ausgewählten Gemüse oder Früchte, um den Gemüse- oder Fruchtsaft, der die vorausgewählte Safteigenschaft oder -charakteristik aufweist, herzustellen.

2. Verfahren gemäß Anspruch 1, wobei eine erste vorausgewählte Safteigenschaft oder -charakteristik aus der Gruppe bestehend aus Brix, Brix/Säure-Verhältnis und Kombinationen daraus ausgewählt wird.

3. Verfahren gemäß Anspruch 2, wobei eine erste gemessene Eigenschaft oder Charakteristik der Frucht oder des Gemüses eine Infrarottransmission ist.

4. Verfahren gemäß Anspruch 3, wobei zumindest eine zweite vorausgewählte Eigenschaft oder Charakteristik der Frucht oder des Gemüses von der Gruppe bestehend aus Brix, Säuregehalt, Brix/Säure-Verhältnis, Größe und Kombinationen daraus ausgewählt wird.

5. Verfahren gemäß Anspruch 4, wobei die zumindest zweite vorausgewählte Safteigenschaft oder -charakteristik das Brix/Säure-Verhältnis ist.

6. Verfahren gemäß Anspruch 1, wobei die Frucht eine Zitrusfrucht, vorzugsweise wobei die Frucht eine Orange oder
wobei die Frucht eine Grapefruit oder
wobei das Gemüse eine Tomate ist.

7. Verfahren gemäß Anspruch 1, wobei eine erste vorausgewählte Safteigenschaft oder -charakteristik des Saftes aus der Gruppe bestehend aus Mundgefühl, Ölgehalt und Kombinationen daraus ausgewählt wird.

8. Verfahren gemäß Anspruch 7, wobei eine erste gemessene Eigenschaft oder Charakteristik der Frucht oder des Gemüses eine Infrarottransmission ist.

9. Verfahren gemäß Anspruch 8, wobei zumindest eine zweite gemessene Eigenschaft oder Charakteristik der Frucht oder des Gemüses aus der Gruppe bestehend aus Brix, Säuregehalt, Brix/Sä-ure-Verhältnis, Größe und Kombinationen daraus ausgewählt wird.

10. Verfahren gemäß Anspruch 9, wobei zumindest eine zweite vorausgewählte Safteigenschaft oder -charakteristik ein Brix/Säure-Verhältnis ist.

11. Verfahren gemäß Anspruch 1 zur Herstellung eines Gemüse- oder Fruchtsaftes aus Gemüsen oder Früchten ohne Ausschuss, wobei das Verfahren umfasst:
Klassifizieren und Trennen des Ausschusses von Früchten oder Gemüsen, die keinen Verderb, wie beispielsweise eine Öffnung in der Haut oder der Rinde, eine Quetschung oder weiche Stellen, eine Veränderung des Gewebes oder einen anderen Defekt aufweisen, durch zerstörungsfreies Prüfen, basierend auf einer Reife und zumindest einer zweiten vorausgewählten Eigenschaft oder Charakteristik der Frucht oder des Gemüses, die aus der Gruppe bestehend aus Brix, Brix/Säure-Verhältnis, Größe und Kombinationen daraus ausgewählt wurden.

## Revendications

1. Procédé de production d'un jus de légume ou de fruit présentant une propriété ou caractéristique de jus prédéterminée, ledit procédé comprenant :
la classification et la séparation par un test non-destructeur de légumes ou fruits à partir desquels le jus est fabriqué en des catégories sur la base d'une propriété ou d'une caractéristique mesurée des légumes ou fruits ;
le choix de légumes ou de fruits à partir des catégories qui produiront chacune un jus de légume ou de fruit présentant la propriété ou caractéristique de jus prédéterminée choisie dans le groupe constitué de Brix, du rapport Brix/acide, de la sensation en bouche, de la teneur en huile, et de combinaisons de ceux-ci, dans lequel on utilise un algorithme prédétermine pour corréler le résultat du test non-destructeur à la propriété ou caractéristique de jus prédéterminée ; et
le traitement ultérieur des légumes ou fruits choisis pour produire le jus de légume ou de fruit présentant la propriété ou caractéristique de jus prédéterminée.

2. Procédé selon la revendication 1, dans lequel une première propriété ou caractéristique de jus prédéterminée est choisie dans le groupe constitué de Brix, du rapport Brix/acide, et de combinaisons de ceux-ci.

3. Procédé selon la revendication 2, dans lequel une première propriété ou caractéristique mesurée du fruit ou légume est le coefficient de transmission infrarouge.

4. Procédé selon la revendication 3, dans lequel au moins une seconde propriété ou caractéristique prédéterminée du fruit ou légume est choisie dans le groupe constitué de Brix, de l'acidité, du rapport Brix/ acide, de la taille, et de combinaisons de ceux-ci.

5. Procédé selon la revendication 4, dans lequel la au moins une seconde propriété ou caractéristique de jus prédéterminée est le rapport Brix/acide.

6. Procédé selon la revendication 1, dans lequel le fruit est un agrume,
de préférence dans lequel le fruit est l'orange ou
dans lequel le fruit est le pamplemousse, ou
dans lequel le légume est la tomate.

7. Procédé selon la revendication 1, dans lequel une première propriété ou caractéristique de jus prédéterminée du jus est choisie dans le groupe constitué de la sensation en bouche, de la teneur en huile, et de combinaisons de celles-ci.

8. Procédé selon la revendication 7, dans lequel une première propriété ou caractéristique mesurée du fruit ou légume est le coefficient de transmission infrarouge.

9. Procédé selon la revendication 8, dans lequel au mains une seconde propriété ou caractéristique mesurée du fruit ou légume est choisie dans le groupe constitué de Brix, de l'acidité, du rapport Brix/ acide, de la taille, et de combinaisons de ceux-ci.

10. Procédé selon la revendication 9, dans lequel au mains une seconde propriété ou caractéristique de jus prédéterminée est le rapport Brix/acide.

11. Procédé selon la revendication 1 pour produire un jus de légume ou de fruit à partir de légumes ou fruits ne présentant pas de déchets, ledit procédé comprenant :
la classification et la séparation des déchets des fruits ou légumes ne présentant pas de détérioration, telle qu'une ouverture dans la peau ou l'écorce, une talure ou un point mou, une éruption ou un autre défaut, par un test non-destructeur sur la base de la maturité et d'au mains une seconde propriété ou caractéristique prédéterminée du fruit ou du légume choisie dans le groupe constitué de Prix, du rapport Brix/acide, de la taille, et de combinaisons de ceux-ci.
